Europäisches Patentamt

European Patent Office

Office européen des brevets

(11) Publication number: **0 407 067 A2**

## EUROPEAN PATENT APPLICATION

(21) Application number: **90306815.3**

(22) Date of filing: **21.06.90**

(51) Int. Cl.⁵: **G06F 12/08**

(30) Priority: **06.07.89 US 376414**

(43) Date of publication of application:
**09.01.91 Bulletin 91/02**

(84) Designated Contracting States:
**AT BE CH DE DK ES FR GB GR IT LI LU NL SE**

(71) Applicant: **DIGITAL EQUIPMENT CORPORATION**
**146 Main Street**
**Maynard, MA 01754(US)**

(72) Inventor: **Chisvin, Lawrence Andrew Paul**
**3 Philemon Whale Lane**
**Sudbury, Massachusetts 01776(US)**
Inventor: **Grooms, John Koehler**
**Sutton Road**
**Webster, Massachusetts 01570(US)**
Inventor: **Rantala, Joseph Franklin**
**134 Barnard Road**
**Worcester, Massachusetts 01615(US)**

(74) Representative: **Goodman, Christopher et al**
**Eric Potter & Clarkson St. Mary's Court St.**
**Mary's Gateate**
**Nottingham NG1 1LE(GB)**

(54) **Cache support architecture.**

(57) A method for identifying data stored in a shared memory resource of a data processing system to support compatibility of the processing system with CPU's with write-through caches, and CPU's with write-back caches, and CPU's without caches over a common data bus.

**FIG. 2**

# CACHE SUPPORT ARCHITECTURE

Field of the Invention

The present invention relates to multi-central processing unit (CPU) data systems with shared memory resources, and more.particularly to a method for supporting compatibility of shared memory between CPU's having "write-through" caches, CPU's having "write-back" caches and CPU's having no caches via a common data bus with the shared memory resources

Background of the Invention

Data processing systems which include multiple CPU's and a common data bus for the sharing of data from one or more memory resources may include CPU's which have their own memory "caches" for storing and processing data from the shared memory or new input through associated input/output devices interfacing directly with the CPU's. The shared memory is generally interfaced with the CPU's via a common data bug. The CPU's with such caches must be interfaced with the shared memory so that blocks of data that they access and acquire are available to any of the CPU's. For this purpose, CPU's may have either "write-through" or "write-back" caches.

When a CPU with a write-through cache decides that it has a need to access a certain block of data, it performs a read command to that block's location in the shared memory. This does not change the "block state" of that block in shared memory. The "block state" of the data block indicates the status of the data block, such as "free" or "owned" as hereinafter further explained. The CPU stores the data from the memory in response to read command in the CPU's cache.

While the data resides in the CPU's cache, reads of that data block are referenced to the cache's copy, but writes to that data block update both the cache copy and the original data block in shared memory. The write command updates the shared data block in memory, but does not change that data's block state. As the name implies, the CPU writes through the cache and into the shared memory.

More than one CPU may cache the same block of data at the same time, but all caching CPU's must monitor the bus for write commands directed to the blocks that they have copies of in their respective caches. If a write command to a cached data block is detected, then all CPU's that have a copy in their cache mark the copies as no long usable or dirty. If they need to read a data block after their cache copy has become dirty, they send a read command to the data block in shared memory to receive a "clean" copy. In a write-through caching scheme, the data transfers between the cache and the shared memory do not change the block state of the shared memory data blocks.

When a CPU with a write-back cache decides that it has a need to access a certain block of data, it performs an ownership read to that block's location in the shared memory. This sets the block state of that block in shared memory to "owned," and the data resides in the CPU's cache.

While the data resides in the CPU's cache, both reads and writes to that data block use the cache's copy. Writes update the cache's copy of the data, but do not update the shared memory copy. The shared memory copy is updated when the CPU must "disown" the block because another CPU wishes to own that block of shared memory, or when the owning CPU is finished accessing that block.

In a write-back caching scheme, the data transfers between the cache and the shared memory affect the block state of the shared memory blocks. The block state is set to "owned" when the CPU "borrows" the data block and the block state is set to FREE when the CPU "returns" the data block.

When a CPU with write-back cache "borrows" a data block and sets its block state to "owned", it assumes that it has the only official copy of the data block. If a CPU with write-through cache attempts to pull the same data block into its cache, it is clear from the preceding description of the two caching schemes that the integrity of that data block has been lost.

CPU's that do not have a memory cache only operate directly upon the data stored in the shared memory. Such CPU's do not recognize "ownership" of the shared data as used in systems including CPU's with write-back caches, so they cannot distinguish when the requested data is being updated by another one of the CPU's.

CPU's with write-through caches and without caches at all often use an interlock protocol to gain exclusive access to locations in the shared memory. However, this interlock protocol uses lock commands which are not compatible with the "own" and "disown" commands used by CPU's with write-back caches. For this reason, data processing systems including CPU's with write-back caches have lacked compatability with CPU's with write-through caches and CPU's without caches.

## Summary of the Invention

The present invention permits the use of a shared memory system for different types of CPU's with write-back caches, write-through caches, or no caches at all, on a common data bus by arranging the stored data into discrete memory data blocks, with a special data block state field assigned to each data block. Eleven data bits are used make up each block state field as follows: two of the eleven bits are reserved for block status; four of the elements are reserved for "node ID", the identification of the last CPU making a change in block state; and, the remaining five of the eleven bits are reserved for error correction code (ECC) information.

The block state bits for each data block change to reflect the ownership and interlock status of the block, as well as to indicate a bad block. The bad block state indication is made by a CPU which corrupts an owned data block in its cache and writes the corrupted cached data back into memory. When this block of data is read by other CPU's, the bad block state indication informs them that the data has been corrupted. The error correction code information protects the integrity of the state and node ID data.

## Description of the Drawings

Figure 1 is a block diagram of a general configuration for a data processing system having a plurality of CPU's linked to a shared memory resource via a common data bus.

Figure 2 is a block diagram of the data block format for the preferred embodiment.

## Description of the Preferred Embodiment

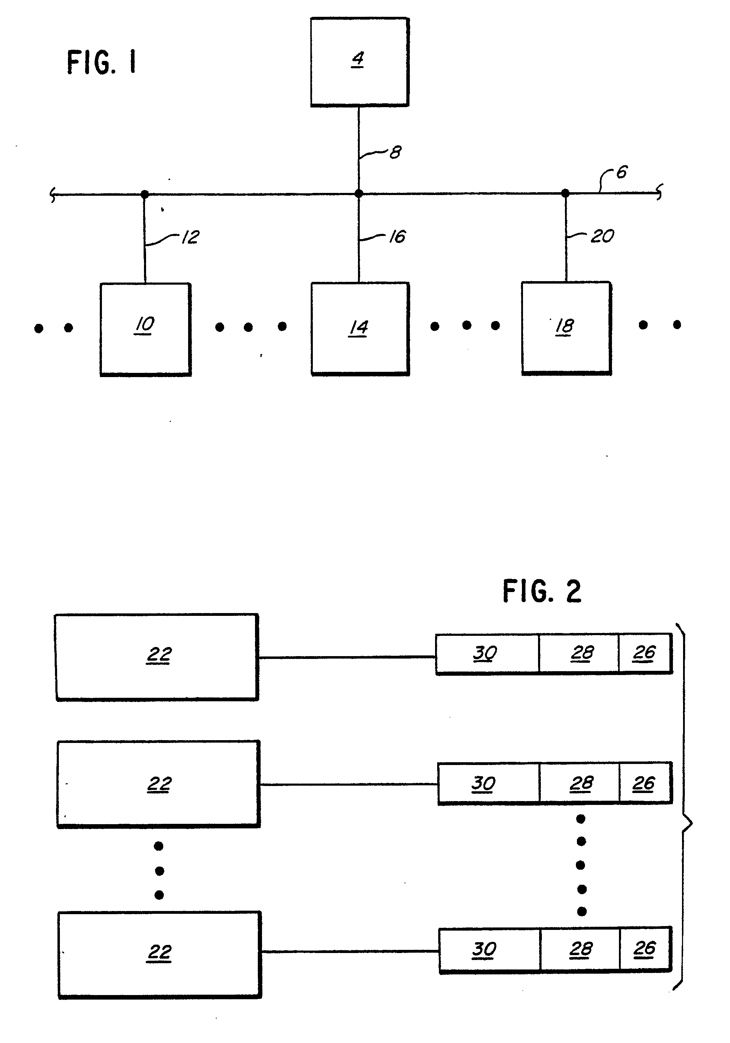

Referring to the drawings, wherein like characters designate like or corresponding parts throughout the views, Figure 1 is a block diagram of a general configuration for a data processing system having a plurality of central processing units (CPU's) linked to a shared memory resource via a common data bus. A data processing system 2 comprises at least one shared memory resource 4 coupled to a common data bus 6 via a communication line 8. At least one write-back cache-containing CPU 10 is coupled to the data bus 6 via a communication line 12. Although only one of the write-back cache-containing CPU's 10 is shown in Figure 1, the data processing system 2 typically has a plurality of the write-back cache-containing CPU's 10.

At least one write-through cache-containing CPU 14 is coupled to the data bus 6 via a communication line 16. Although only one of the write-through cache-containing CPU's 14 is shown in Figure 1, the system 2 typically has a plurality of the write-through cache-containing CPU's 14. At least one cache-less CPU 18 is coupled to the data bus 6 via a communication line 20. Although only one of the cache-less CPU's 18 is shown in Figure 1, the system 2 typically has a plurality of the cache-less CPU's 18.

The present invention provides compatibility between the CPU's 10, 14, 18 with different caching systems in the single data processing system 2 over the common data bus 6 by providing special "block state" data fields for discrete blocks of data stored in the shared memory resource 4 of the data processing system 2. Referring to Figure 2, each block of data comprises a 32 byte data block 22. Each data block 22 has an associated block state field 24. The block state field 24 comprises a data field of 11 bits of block state information data. The first two of these bits make up a status field 26, which identifies the data block 22 as being in one of four possible states. The bits which are used for this purpose are shown in Table 1.

Table 1

| Bit 1 | Bit 2 | State |
|-------|-------|-------|
| 0 | 0 | Free |
| 0 | 1 | Owned |
| 1 | 0 | Interlocked |
| 1 | 1 | Tagged Bad |

The "free" state in Table 1 indicates that the data block 22 is available to any of the CPU's 10, 14, 18 in the data processing system 2. This state occurs when the data block 22 is not accessed by any of the CPU's 10, 14, 18, regardless of the caching system it has. The "owned" state in Table 1 indicates that the data block 22 has been accessed by one of the write-back cache- containing CPU's 10 via a "check-out" function. This state is used to prevent the data in the data block 22 from being accessed by another one of the CPU's 10, 14, 18 until the write-back cache-containing CPU 10 that has "checked-out" the data block 22 sends a "disown" command to change the state of the data block 22 back to free. The "interlocked" state indicates that another one of the write-through cache-containing CPU's 14, or one of the cache-less CPU's 18, has "interlocked" the data block 22. The data block 22 is interlocked according to the protocol of the data processing system memory management, according to well known management methods for multiple CPU systems with write-through caches. This state allows CPU's to access the data block 22 via an interlock operation, rather than a "check-out" operation as used to put the data block 22 in the "owned" state. Thus, write-back cache-containing CPU's 10 and write-through cache-containing CPU's 14 may both operate on the same data block 22 with their own respective functions. The "tagged bad" state indicates that the data has been corrupted in the cache of one of the write-back cache-containing CPU's 10 with uncorrectable data error. Of course, the specific arrangement of bits to designate each of these states may be made other than that shown in Table 1, according to design choice.

The bits 3 through 6 of the 11 bit block state field 24 make up a "node ID" field 28 for storing the identity of one of the CPU's 10, 14, 18 that last changed the block state of the data block 22. Whenever one of the CPU's 10, 14, 18 changes the state of the data block 22, the "node ID," or identification, of that one of the CPU's 10, 14, 18 is written in bits 3 through 6. Each of the CPU's 10, 14, 18 has a node ID corresponding to a different assignment of the four bits. In this arrangement sixteen different ones of the CPU's 10, 14, 18 can be identified. If additional CPU's 10, 14, 18 are part of the data processing system 2 the number of bits in the node ID field 24 may be expanded to provide proper identification. This is useful for diagnostic purposes, because if the data block is "tagged bad" due to data which has been corrupted with uncorrectable error by the cache of one of the CPU's 10 that last "owned" the data block 22, the node ID of that one of the CPU's 10 is identifiable.

The bits 7 through 11 of the 11 bit block state field 24 make up an error correction code (ECC) field 30 used for storing error correction code information. These five bits are coded according to a well known modified Hamming Code to provide single bit correction and double bit detection of errors over the entire 11 bit block state field 24. If the number of bits for the ID node field 28 are expanded, the corresponding number of bits for the ECC field 30 can also be expanded as desired.

During normal operation, the block state field 24 of each of the data blocks 22 changes to reflect the free, ownership, interlock or bad data status of the data blocks 22 in the shared memory resource 4 of the data processing system 2. It also changes to indicate the identity of the last one of the CPU's 10, 14, 18 to change the status field 26 in the node ID field 28, and the ECC data in the ECC field 28. The actual state of the data block is not seen by the requesting CPU's 10, 14, 18. For diagnostic work, the block state field 24 provides the CPU's 10, 14, 18 with data to read and write the block state directly. For instance, during diagnosis operations, the diagnostic and control status registers of the CPU's 10, 14, 18 may be configured to allow the block state field to appear in the read data field when one of the CPU's 10, 14, 18 performs a read command to the shared memory resource 4. This is done by interchanging the 11 block state data bits from the block state field 24 with the same number of bits from the read data that is sent back to a requesting one of the CPU's 10, 14, 18. For instance, the first 11 bits of read data requested by one of the CPU's 10, 14, 18 from one of the data blocks 22 may be interchanged with the bits of its associated block state field 24. Alternately, another group of bits in the data blocks 22 may be interchanged. The diagnostic configuration also allows the block state field 24 to be directly written by one of the CPU's 10, 14, 18 through the use of a write command by writing in the block state field 24 with 11 bits of write data to the associated one of the data blocks 22.

4

The block states may be accessed by the CPU's 10, 14, 18 for reading or rewriting even during normal operation, if necessary. For instance, the block states may need to be changed from "tagged bad" to "free". The bad block state indication is made by a CPU which corrupts an owned data block in its cache and writes this corrupted cached data back into memory. When this block of data is read by other CPU's, the bad block state indication, "tagged bad", informs them that the data has been corrupted.

Thus, there has been described herein a method for identifying data in the shared memory resource of a data processing system to allow compatibility of the processing system with CPU's having write-back caches, CPU's having write-through caches and CPU's having no caches over the same data bus. It will be understood that various changes in the details, arrangements and configurations of the components and systems which have been described above in order to explain the nature of the invention may be made by those skilled in the art written the principle and scope of the invention as expressed in the appended claims.

**Claims**

1. A method of identifying data blocks stored in a shared memory resource of a data processing system and for providing access to said data blocks by central processing units (CPU's) having write-back caches, CPU's having write-through caches, and CPU's without caches comprising the steps of:
arranging data into a plurality of data fields, each of said data fields being associated with one of said data blocks;
allocating two bits of each of said data fields for storing information identifying one of four possible block states for each of said data blocks;
allocating additional bits of each of said data fields for storing information identifying one of said CPU's; and
allocating still additional bits of each of said data fields for storing information identifying an error correction code data for said data field.

2. The method recited in claim 1, wherein said step of allocating two bits for each of said data fields comprises the step of designating said four possible states as the states free, owned, interlocked and tagged bad.

3. The method recited in claim 2, wherein said step of designating said four possible states comprises the steps of:
designating said free state to represent that said data block is available for one of said CPU's;
designating said owned state to represent that said data block is being used by one of said CPU's having a write-back cache;
designating said interlocked state to represent that said data block is interlocked by one of said CPU's having a write-through cache or no cache at all; and,
designating said tagged bad state to represent that said data block contains uncorrectable bad data.

4. The method recited in claim 3, wherein said step of designating said four possible states comprises assigning a different combination of said two bits for each of said states.

5. The method recited in claim 1, wherein said step of allocating said additional bits of said data field for CPU identity comprises the step of assigning the combination of said additional bits to represent the identity of the one of said CPU's which last changed the block state of said data block.

6. The method recited in claim 1, wherein said step of allocating said still additional bits of said data field for error correction code data comprises the step of arranging the combination of said still additional bits in accordance with an error correction code.

7. A method of identifying data blocks stored in a shared memory resource of a data processing system and for providing access to said data by central processing units (CPU's) having write-back caches, CPU's having write-through caches, and CPU's without caches, comprising the steps of:
arranging data into a plurality of data fields, each of said data fields being associated with one of said data blocks;
allocating two bits of each of said data fields for storing information identifying four possible states of said data block, said states comprising a free state to represent that said data block is available for one of said CPU's, an owned state to represent that said data block is being used by one of said CPU's having a write-back cache, an interlocked state to represent that the data block is exclusively being used by any one of said CPU's and a tagged bad state to represent that said data block contains uncorrectable bad data;
allocating an additional four bits of each of said data fields for storing information identifying of the one of said CPU's which last changed the block state of said data block; and
allocating still additional bits of each of said data fields for storing information identifying an error code correction data.

8. A method of identifying data blocks stored in a shared memory resource of a data processing system and for providing access to said data by central processing units (CPU's) having write-back caches, CPU's having write-through caches and CPU's without caches comprising the steps of:

arranging data into a plurality of data fields, each of said data fields being associated with one of said data blocks;

allocating two bits of each of said data fields for storing information identifying one of four possible block states for each of said data blocks;

allocating additional bits of each of said data fields for CPU identity by arranging the combination of said additional bits to represent the identity of the one of said CPU's which last changed the block state of said data block; and

allocating still additional bits of each of said data field for storing information identifying an error correction code data for said header field.

9. A method of identifying data blocks stored in a shared memory resource of a data processing system and for providing access to said data by central processing units (CPU's) having write-back caches, CPU's having write-through caches, and CPU's without caches comprising the steps of:

arranging data into a plurality of data fields, each of said data fields being associated with one of said data blocks;

allocating two bits of each of said data fields for storing information identifying one of four possible block states for each of said data blocks;

allocating additional bits of each of said data fields for storing information identifying one of said CPU's; and

allocating still additional bits of each of said data fields for error correction code data by arranging the combination of said still additional bits in accordance with an error correction code.

10. A method of identifying data blocks stored in a shared memory resource of a data processing system and for providing access to said data by central processing units (CPU's) having write-back caches, CPU's having write-through caches, and CPU's without caches, comprising the steps of:

arranging data into a plurality of data fields, each of said data fields being associated with one of said data blocks;

allocating two bits of each of said data fields for storing information identifying four possible states of said data block, said states comprising a free state to represent that said data block is available for one of said CPU's, an owned state to represent that said data block is being used by one of said CPU's having a write-back cache, an interlocked state to represent that the data block is exclusively being used by any one of said CPU's and a tagged bad state to represent that said data block contains uncorrectable bad data;

allocating additional bits of each of said data fields for CPU identity by arranging the combination of said additional bits to represent the identity of the one of said CPU's which last changed the block state of said data block; and

allocating still additional bits of each of said data fields for error correction code data by arranging the combination of said still additional bits in accordance with an error correction code.

FIG. 1

FIG. 2